Europäisches Patentamt

(19) European Patent Office

Office européen des brevets

(11) Publication number: **0 307 229**
**A2**

(12) # EUROPEAN PATENT APPLICATION

(21) Application number: **88308356.0**

(22) Date of filing: **09.09.88**

(51) Int. Cl.⁴: **B 65 D 81/26**
**B 65 D 81/24, B 65 D 65/40**

(30) Priority: **09.09.87 JP 137975/87**

(43) Date of publication of application:
**15.03.89 Bulletin 89/11**

(84) Designated Contracting States: **BE DE FR IT NL**

(71) Applicant: **TOHOKU KOGYO CO., LTD.**
**12-5 Hohaccho 1-chome**
**Koriyama-shi Fukushima-ken (JP)**

**NITTETSU MINING CO., LTD.**
**3-2, Marunouchi 2-chome Chiyoda-ku**
**Tokyo 100 (JP)**

(72) Inventor: **Kawasaki, Katsuo**
**6-7 Kaguike 1-chome**
**Koriyama-sho Fukushima-ken (JP)**

**Gotoh, Tomoyuki**
**8-3, Shimorenjaku 8-chome**
**Mitaka-shi Tokyo-to (JP)**

**Nakagawa, Masahiko**
**5-20, Minamida-machi**
**Mishima-shi Shizuoka-ken (JP)**

(74) Representative: **Boon, Graham Anthony et al**
**Elkington and Fife Beacon House 113 Kingsway**
**London, WC2B 6PP (GB)**

(54) **Freshness-maintaining corrugated cardboard box.**

㊅ A corrugated cardboard box (10) is provided for maintaining the freshness of vegetables, fruits, natural flowers, etc. for a long period during the storage and transportation thereof. The corrugated cardboard is fabricated with a double-faced corrugated cardboard comprising an outer liner (3), an inner liner (1) and a corrugated core (2) between the outer and inner liners. The inner liner (1) is composed of a fibrous substance and a powdery porous inorganic substance.

**FIG. I**

EP 0 307 229 A2

**Description**

## FRESHNESS-MAINTAINING CORRUGATED CARDBOARD BOX

The present invention relates to a corrugated cardboard box adapted to contain vegetables and fruits such as cucumbers, unripe apricots and peaches as well as natural flowers with their freshness being maintained for a long period during the storage and transportation thereof.

Method of maintaining the freshness of vegetables, fruits and natural flowers during the storage and transporation thereof which have heretofore been employed include one in which a plastic of holes (those of about 10 to 30 mm diameter) are provided for ventilation through the side walls of a corrugated cardboard box, one in which a plastic film is laminated to the inner wall surfaces of a corrugated cardboard box, one in which Japanese paper or non-woven fabric packages filled with a freshness-maintaining agent such as activated carbon are placed in a corrugated cardboard box during the use thereof, one which comprises laying on the bottom of a corrugated cardboard box during the use thereof a freshness-maintaining sheet containing powder of natural zeolite or the like having potassium permanganate adsorbed thereon and sandwiched between non-woven fabrics or the like, and one in which vegetables, fruits, or natural flowers are put into a plastic film bag, such as a polyethylene bag or the like, and placed in a corrugated cardboard box.

Recent years have witnessed a remarkable progress of the freezing and cold reserving technique, which is, therefore, applied to the storage and transportation of vegetables, fruits and natural flowers to contribute to the maintenance of the freshness thereof. Specifically, the method comprises putting vegetables, fruits, or natural flowers into a common corrugated cardboard box, closing the box, freezing them and maintaining the favorably low temperature in a state of being contained in the box during the storage and transportation thereof.

The foregoing conventional methods have respective defects and hence are not yet widely employed.

Specifically, the method comprising providing holes through the side walls of a corrugated cardboard box is devoid of any water-retaining function indispensable for maintaining the freshness because of too high an air-permeability of the holes with failure in achieving the purpose. The method comprising laminating a plastic film to the inner walls of a corrugated cardboard box does not allow any ordinary adhesive to be used in setting up the box and instead necessitates the use of staples because the surface of the inner wall is covered with the film, and this film must be peeled off when the used corrugated cardboard box is utilized as wastepaper, or a raw material of reclaimed paper. The method using a package filled with a freshness-maintaining agent involves a fear of contaminating vegetables, fruits, or natural flowers with the agent when the package is broken, and a necessity of preliminarily removing the package when the used box is utilized as wastepaper like, the aforementioned plastic film lamination method. The method comprising laying a freshness-maintaining sheet on the inner bottom of a corrugated cardboard box has defects of low safety of potassium permanganate used, poor workability resulting from laying of the sheet in every box, and removal of the sheet when the used corrugated cardboard box is utilized as a raw material or reclaimed paper. The method using a plastic film bag has a notable disadvantage of poor workability and involves a necessity of removal of the bag when the used box is utilized as a raw material of reclaimed paper.

The method comprising freezing a large number of corrugated cardboard boxes and maintaining the favorably lower temperature during the storage and transportation involves a high cost leading to an economical disadvantage and a difficulty in reserving cold storage rooms and refrigerator cars during the season for vegetables and fruits as well as natural flowers.

In view of the fact that the foregoing conventional methods of maintaining the freshness of vegetables, fruits and natural flowers are not necessarily appropriate, the present invention has been made with a view to providing a suitable means which can solve the problems of the prior arts and can effectively contain, store, and transport vegetables, fruits and natural flowers while maintaining the freshness thereof.

An object of the present invention is to provide an improved corrugated cardboard box for maintaining the freshness of vegetables, fruits and natural flowers.

Another object of the present invention is to provide an improved, freshness-maintaining corrugated cardboard box which permits to effectively contain, store and transport vegetables, fruits and natural flowers while maintaining the freshness thereof.

A further object of the present invention is to provide a new freshness-maintaining corrugated cardboard box which has desired characteristics in working, safety, non-contamination, economy and regeneration of used corrugated cardboard box.

Briefly, the present invention provides a new freshness-maintaining corrugated cardboard box, which is a box fabricated with a double-faced corrugated cardboard comprising an inner liner material, an outer liner and a corrugated core between the inner and outer liners. The inner liner is composed of 60 to 95 wt.% of a fibrous substance comprising cellulosic fibers as the main component and 5 to 40 wt.% of a powdery porous inorganic substance.

Fig. 1 is a schematic illustrative view of the structure of a double-faced corrugated cardboard to be used in the present invention; and

Fig. 2 is a cross-sectional view of an example of the corrugated cardboard box according to the present invention.

The corrugated cardboard box of the present invention can be produced according to the following procedure. First, a paper-like material is formed using a fibrous substance containing cellulosic fibers as the main component and a powdery porous inorganic substance having a freshness-maintaining function according to a conventional paper-making method, and the resulting paper-like material is used as an inner liner in producing a double-faced corrugated cardboard. Then, by using a conventional corrugated cardboard producing machine, a double-faced corrugated cardboard is produced from the thus formed inner liner, a generally commerically available outer liner and a corrugated core.

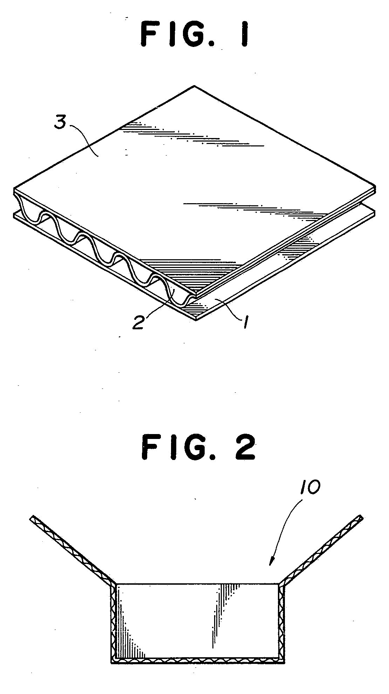

Fig. 1 shows the double-faced corrugated cardboard produced in the above-mentioned manner. In Fig. 1, an inner liner 1 contains a powdery porous inorganic substance, a corrugated core 2 and an outer liner 3. The double-faced corrugated cardboard is printed on the surface of the outer liner thereof if necessary, and is subjected to conventional fabrication steps of cutting, folding, and bonding to produce a corrugated cardboard box 10, for example, as shown in Fig. 2. The inner liner 1 as shown in Fig. 1 constitutes the inner surface of the box 10.

According to the present invention, since a freshness-maintaining function can be provided simultaneously with the production of the corrugated cardboard due to the freshness-maintaining function of the inner liner itself to be used in the corrugated cardboard box for vegetables, fruits and natural flowers, no additional step is necessary as against the conventional method comprising film lamination. Also, and an excellent workability during the course of placing vegetables, fruits, or natural flowers in the box is secured as against the conventional methods using a freshness-maintaining agent or sheet, or a bag. Further, since the powdery porous inorganic substance is incorporated into the paper-like material as the inner liner, neither fear of poor safety nor fear of contamination arises. In addition, the corrugated cardboard box of the present invention can be directly utilized as wastepaper or a raw material of reclaimed paper after the use thereof in the storage and transporation of vegetables, fruits, or natural flowers.

Powdery porous inorganic substances usable in the present invention include cristobalite, zeolite, silica gel, activated alumina, activated clay, and diatomaceous earth. These substances have a function of controlling the temperature, the humidity, the CA (controlled atmosphere) condition, and harmful gases, which are factors influencing the freshness of vegetables and fruits as well as natural flowers after the harvest thereof. Specifically, low temperatures can be maintained without being too much affected by the surrounding environment to suppress the progress of maturation of vegetables and fruits as well as natural flowers. Further, transpiration of water can be prevented and the humidity in the corrugated cardboard box can be controlled with the pores of the powdery porous inorganic substance Furthermore, the balance between the concentrations of $CO_2$ gas and $O_2$ gas can be appropriately kept, and ethylene gas which acts to cause post-maturation aging can be removed by adsorption thereof on the powdery porous inorganic substance.

The method of forming the paper-like material using a powdery porous inorganic substance can employ any one of conventional paper-making techniques. The amount of the powdery porous inorganic substance to be incorporated is restricted to a given extent from the viewpoint of fabrication of a corrugated cardboard and a corrugated cardboard box and the freshness-maintaining performance thereof.

Specifically, when the content of the powdery porous inorganic substance in the paper-like material exceeds 40 wt.%, the content of a fibrous substance such as a cellulosic fiber decreases to lower the tensile strength of the paper-like material, with the result that the paper-like material is broken in the course of forming a corrugated cardboard therefrom at a high speed and causes disadvantages of abrasion of a cutter blade during cutting of the material therewith and aggravation of the state of a cut surface of the material. When it is less than 5 wt.%, the freshness-maintaining function is notably decreased.

Only one kind of powdery porous inorganic substance is not necessarily used, and a few or several kinds of desired porous inorganic substance may be used in mixture.

[Examples] .

Tables 1, 2, 3 and 4 show the results of Examples 1 to 5 within tests on the freshness-maintenance of cucumbers, chrysanthemums, unripe Japanese apricots("ume"), and peaches were conducted using corrugated cardboard boxes according to the present invention. They also show the results of Comparative Examples 1 to 5 wherein freshness-maintenance tests were conducted using common corrugated cardboard boxes (corrugated cardboard boxes having an inner liner containing no powdery porous inorganic substance).

As can be understood from the foregoing description, the freshness-maintaining corrugated cardboard box according to the present invention has desired characteristics in all aspects of working, safety, contamination, freshness-maintaining performance, economy, and re-utilization of the used corrugated cardboard box, and can be effectively used in the freshness maintenance of vegetables and fruits as well as natural flowers.

Table 1.  Test on Freshness Maintenance of Cucumbers

| | | | Ex. 1 | Comp. Ex. 1 | Comp. Ex. 2 |
|---|---|---|---|---|---|
| Specification of corrugated cardboard box (5 kg/box) | | size (mm) | 285L x 450W x 100D | | |
| | | constitution (basis wt.: g/m$^2$) | corrugated cardboard box of the present invention<br><br>outer liner· K 220<br>core S 120<br>inner liner 230<br>⎧cristobalite 30%<br>⎩cellulosic fiber 70% | common corrugated cardboard box<br><br>outer liner K 220<br>core S 120<br>inner liner K 220 | common corrugated cardboard box<br><br>outer liner K 220<br>core S 120<br>inner liner K 220<br><br>A 20 μ-thick poly-ethylene bag containing cucumbers was placed in a corrugated cardboard box. |
| *3 Results | *1 weight loss (%) | after 3 days | 1.3 | 1.0 | 2.4 |
| | | after 7 days | 2.7 | 2.3 | 4.5 |
| | *2 discoloration | after 3 days | O | O | Δ |
| | | after 7 days | O | Δ | x |
| | *2 hardness | after 3 days | O | O | Δ |
| | | after 7 days | O | O | x |

Notes)   *1. weight loss based on weight just after harvesting

*2. Evaluation

| | Discoloration | Hardness |
|---|---|---|
| O | none | the same as that just after harvesting |
| Δ | partially | partially soft |
| x | > 50% | wholly soft |

*3. test conditions: temp.    27 ∿ 31°C

humidity  60 ∿ 70% RH

EP 0 307 229 A2

Table 2. Test on Freshness Maintenance of Chrysanthemums

| | | | Ex. 2 | Comp. Ex. 3 |
|---|---|---|---|---|
| Specification of corrugated cardboard box (100 pieces/box) | | size (mm) | 1440L x 350W x 165D | |
| | | constitution (basis wt.: g/m$^2$) | corrugated cardboard box of the present invention<br><br>outer liner    K 280<br>core           S 160<br>inner liner    280<br>/cristobalite      10%<br>( zeolite         10%<br>\cellulosic fiber  80% | common corrugated cardboard box<br><br>outer liner    K 280<br>core           S 160<br>inner liner    K 280 |
| *4 Results | *5 discoloration | after 1 day | ◎ | ○ |
| | | after 3 days | ◎ | Δ |
| | *5 droop | after 1 day | ◎ | Δ |
| | | after 3 days | ○ | x |

Notes)   *4. test conditions:   temp.      27 ∿ 31°C

humidity   60 ∿ 70% RH

*5. Evaluation  ◎ very good

○ good

Δ slightly bad

x bad

EP 0 307 229 A2

EP 0 307 229 A2

Table 3.  Test on Freshness Maintenance of Unripe Japanese Apricots

| Specification of corrugated cardboard box (18 pieces/box) | | | size (mm) | Ex. 3 | Comp. Ex. 4 |
|---|---|---|---|---|---|
| | | | size (mm) | 300L x 130W x 50D | |
| | | | constitution (basis wt.: g/m$^2$) | corrugated cardboard box of the present invention<br><br>outer liner    K 280<br>core          S 120<br>inner liner     220<br>⎛cristobalite      15%<br>⎜zeolite           15%<br>⎝cellulosic fiber  70% | common corrugated cardboard box<br><br>outer liner    K 280<br>core          S 120<br>inner liner    K 220 |
| Results<br><br>number of yellowed samples/ total number of samples | at ordinary temp. temp.      27°C humidity   70% | | after 1 day | 1/18 | 6/18 |
| | | | after 2 days | 6/18 | 16/18 |
| | | | after 3 days | 12/18 | 18/18 |
| | cooled temp.      8°C humidity   90% | | after 1 day | 0/18 | 0/18 |
| | | | after 2 days | 1/18 | 12/18 |
| | | | after 3 days | 3/18 | 14/18 |
| | | | after 4 days | 5/18 | 16/18 |
| | | | after 5 days | 6/18 | 17/18 |

Table 4. Test on Freshness Maintenance of Peaches

| Specification of corrugated cardboard box (22 pieces/box) | | | Ex. 4 | Ex. 5 | Comp. Ex. 5 |
|---|---|---|---|---|---|
| | size (mm) | | 460L x 300W x 100D | | |
| | constitution (basis wt.: g/m$^2$) | | corrugated cardboard box of the present invention<br><br>outer liner K 280<br>core S 160<br>inner liner 280<br>/cristobalite 25%<br>\cellulosic fiber 75% | corrugated cardboard box of the present invention<br><br>outer liner K 280<br>core S 160<br>inner liner 280<br>/zeolite 15%<br>\silica gel 10%<br>\cellulosic fiber 75% | common corrugated cardboard box<br><br>outer liner K 280<br>core S 160<br>inner liner K 280 |
| Results | *6. weight loss (%) | after 3 days | 1.5 | 1.4 | 1.5 |
| | | after 5 days | 2.2 | 2.3 | 3.4 |
| | | after 7 days | 3.1 | 3.5 | 6.2 |
| | *7 hardness | after 3 days | 6.9 | 7.0 | 5.1 |
| | | after 5 days | 6.1 | 6.3 | 4.5 |
| | | after 7 days | 5.7 | 5.8 | 3.8 |
| | *8 peach core temp. (°C) | after 3 days | 29.3 | 29.5 | 30.1 |
| | | after 5 days | 30.3 | 30.2 | 30.7 |
| | | after 7 days | 30.9 | 31.2 | 31.8 |
| | Appearance (number of rotten samples/ total number of samples) | after 3 days | 0/22 | 0/22 | 3/22 |
| | | after 5 days | 0/22 | 0/22 | 7/22 |
| | | after 7 days | 0/22 | 0/22 | 10/22 |

Notes) *6. weight loss based on weight just after harvesting

*7. Use was made of a universal hardness meter manufactured by Sato Seisakusho. (average hardness just after harvesting: 7.3).

*8. Use was made of a thermistor thermometer manufactured by Takara Kogyo. outer temp.: 29 ∿ 32°C (average core temp. just after harvesting: 25.3°C)

EP 0 307 229 A2

## Claims

1. A freshness-maintaining corrugated cardboard box fabricated with a double-faced corrugated cardboard comprising an outer liner, an inner liner and a corrugated core between said outer liner and said inner liner, wherein said inner liner is composed of a fibrous substance and a powdery porous inorganic substance.

2. A freshness-maintaining corrugated cardboard box according to claim 1, wherein said inner liner is composed of 60 to 95 wt.% of said fibrous material comprising cellulosic fibers as a main component and 5 to 40 wt.% of said powdery porous inorganic substance.

3. A freshness-maintaining corrugated cardboard box according to claim 1, wherein said powdery porous inorganic substance is selected from cristobalite, zeolite, silica gel, activated alumica, activated clay and diatomaceous earth.

# FIG. 1

# FIG. 2